# EUROPÄISCHE PATENTSCHRIFT

(11) **EP 2 269 809 B1**
(45) Veröffentlichungstag und Bekanntmachung des Hinweises auf die Patenterteilung: **20.08.2014**
(21) Anmeldenummer: 10185906.4
(22) Anmeldetag: 28.03.2002
(51) Int. Cl.: B29C 67/00, B29C 37/00, B29C 33/68

(54) **Vorrichtung für die zerstörungsfreie Trennung ausgehärteter Materialschichten von einer Bauebene**
Device for the non-destructive release of a product made of hardened layers from a plate platform
Dispositif pour la séparation non-destructrice d'un produit constitué de couches durcies d'un plan de travail

(30) Priorität: 23.04.2001 DE 10119817
(43) Veröffentlichungstag der Anmeldung: 05.01.2011
(62) Teilanmeldung aus: 02007414.2
(73) Patentinhaber: EnvisionTEC GmbH, 45968 Gladbeck (DE)
(72) Erfinder: John, Hendrik, 46569, Hünxe (DE)
(74) Vertreter: Viering, Jentschura & Partner Patent- und Rechtsanwälte

(56) Entgegenhaltungen:
- EP-A1- 0 466 422
- EP-A1- 0 484 086
- US-A- 5 650 260

## Beschreibung

Die Erfindung betrifft eine Vorrichtung für die zerstörungsfreie Trennung ausgehärteter Materialschichten von einer planen Bauebene.

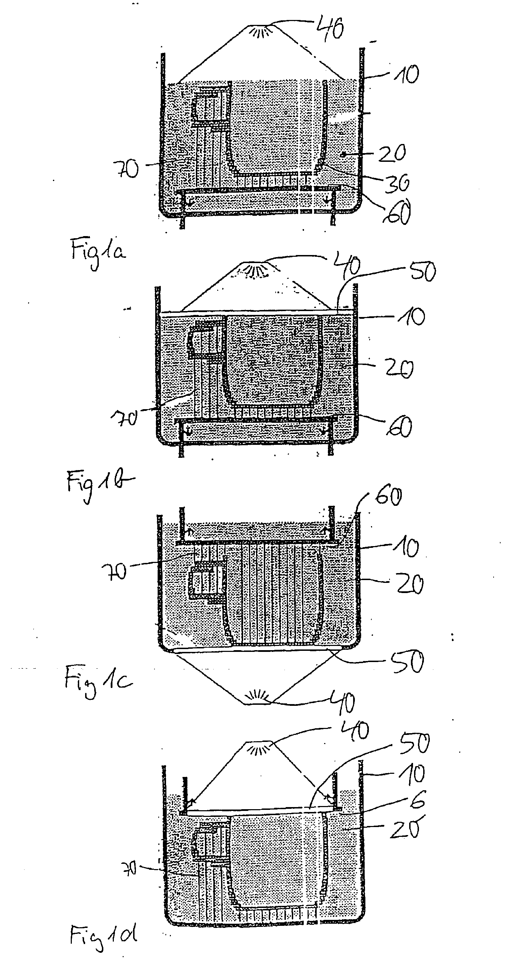

Für den schichtweisen Aufbau dreidimensionaler Objekte aus "lichthärtenden" Photopolymeren werden in der Literatur unterschiedlichste Verfahren angegeben, siehe hierzu "Automated Fabrication - Improving Productivity in Manufacturing" von Marshall Burns, 1993 (ISBN 0-13-119462-3). Unter die beschriebenen Verfahren fallen drei Varianten, bei der die zu erzeugende Schicht an einer transparenten Referenzebene, ein sogenanntes "Contact Window" (KontaktFenster), durch diese hindurch selektiv belichtet wird und polymerisiert/aushärtet. Die drei Varianten sind in Abb. 1a bis c skizziert. In den Figuren bezeichnet 10 einen Behälter, 20 ein in dem Behälter befindliches flüssiges polymerisierbares Material, 30 ein zu bildendes Objekt, 40 eine Lichtquelle mit einer Maskenererzeugungseinrichtung zur Abbildung eines Querschnittsbildes, 50 das Kontaktfenster, 60 eine Trägerplattform für das Objekt und 70 Stützen für das Objekt.

Das hier im folgenden beschriebene Verfahren ist eine Weiterentwicklung des in der Gebrauchsmusterschrift DE G 93 19 405.6 "Vorrichtung zur Herstellung eines dreidimensionalen Objekts (Modells) nach dem Prinzip der Photoverfestigung" beschriebenen Verfahrens.

Um die ausgehärtete Masterialschicht von dem Kontaktfenster / der Referenzebene trennen zu können, wird in den Patentschriften US 5,171,490 (Efrem V. Fudim) und DE 41 25 534 A1 (EOS GmbH, Electro Optical Systems) eine Lösung für eine Trennschicht mit Hilfe einer dünnen Folie aus felxiblem Kunsstoff beschrieben.

JP 06 246 832 offenbart eine Vorrichtung gemäß dem Oberbegriff des Anspruchs 1.

Bei der selektiven Belichtung durch Laser oder Maske in unterschiedlich geformten Flächenstrukturen direkt an einer, der Strahlungsquelle gegenüberliegenden Seite einer transparenten Referenzebene, polymerisiert das Harz in direktem Kontakt mit dieser Referenzebene aus. Die Problematik besteht darin, die in Ihrer Flächenstruktur unterschiedlich ausgebildete Schicht so von der transparenten Referenzebene zu trennen, dass sie an den vorher erzeugten Schichten haften bleibt und durch die Trennkraft sowohl die entstandene Schicht als auch der bereits erzeugte Teil des Objektes nicht verformt oder gar zerstört bzw. abgerissen wird und letztendlich das Schicht für Schicht entstehende Objekt über den gesamten Bauprozeß an der Trägerplatte haften bleibt.

Durch den in den oben beschriebenen Patenten vorgeschlagenen Einsatz einer Trennfolie, wird sich der sogenannte Schäleffekt zunutze gemacht, dass heißt die Folie schält sich durch den Trennvorgang regelrecht von der ausgehärteten Polymerschicht ab, wodurch die Trennkräfte in Z-Richtung aufgrund einer Kräftevektorenzerlegung verringert werden. Dient die Folie als Trennschicht zur transparenten Referenzebene und wird nur das zu bauende Objekt zwecks Trennung von der Referenzebene wegbewegt, ist der Trennweg deutlich größer als die eigentlich zu bauende, folgende Schichtdicke, da durch die während des Trennvorgangs aufgebaute elastische Spannung in der Folie die notwendige Trennkraft für den eigentlichen Schälvorgang aufgebaut werden muss. Dieser Verfahr- bzw. Trennprozess kostet zusätzlich Zeit, die jeweils zur Polymerisationszeit einer Bauschicht hinzugerechnet werden muß und so wesentlich die Gesamtbauzeit des Bauprozesses bestimmt. Ausserdem besteht die Gefahr, dass sich die Folie auf Dauer plastisch verformt, "Falten/Wellen schlägt" und so keine ebene Fläche mehr bildet.Hier ist in Abhängigkeit von der Fläche der an der transparenten Referenzebene auspolymerisierten Schicht eine Adhäsionskraft zwischen Objekt bzw. ausgehärteter Schicht und transparenter Referenzebene zu überwinden. Da es sich i.d.R. um ungleichmäßige Flächenstrukturen handelt, sind die angreifenden Adhäsionskräfte ebenfalls ungleichmäßig verteilt.

Aufgabe der Erfindung ist es, eine Lösung für eine Trennschicht und/oder ein Trennverfahren zu schaffen, die/das unabhängig von
a) der ausgehärteten Flächengröße,
b) der Ausbildung der Flächenstruktur der ausgehärteten Schicht,
c) dem verwendeten aushärtenden Material
eine leichte Trennung der ausgehärteten Schicht von der transparenten Referenzebene ermöglicht, so dass die aktuell ausgehärtete Schicht in Verbindung mit dem bereits erzeugten Schichtaufbau in ihrer ürsprünglichen Form erhalten bleibt, der nötige Verfahrweg zur Trennung minimiert und so die Bauzeit pro Schicht reduziert wird und der Prozeß dabei langzeitstabil ist.

Diese Aufgabe wird durch eine Vorrichtung mit den Merkmalen nach Anspruch 1 gelöst. Weiterbildungen sind in den Unteransprüchen angegeben.

Weitere Merkmale und Zweckmäßigkeiten ergeben sich aus der Beschreibung von Ausführungsbeispielen anhand der Figuren. Von den Figuren zeigen:
Fig. 1: den Stand der Technik;
Fig. 2: eine transparente Bodenplatte 2 mit darauf vorgesehener Trennschicht 1, flüssigem Photopolymer 3 und dem Objekt 5;
Fig 3a: eine Anordnung nach Fig. 2, wobei die Trennschicht 1 als transparente Folie ausgebildet ist, die zwischen der Bodenplatte und dem Photopolymer angeordnet ist;
Fig 3b bis 3c: den Vorgang des Ablösens der bereits verfestigten Schicht 4 von der Trennschicht;
Fig: 4: eine schematische Darstellung einer Vorrichtung für ein Rapid Prototyping Verfahren mit Hilfe der Photoverfestigung mit einer als Polymerisationswanne ausgeformten Trennschicht 1 und einer in z-Richtung verfahrbaren Objekthalterung 7;
Fig 5a und 5b: schematische Darstellungen zur Veranschaulichung des Vermeidens der Haftung der Folie bzw. Trennschicht 1 an der Bodenplatte 2;
Fig: 6: eine schematische Darstellung des Einspannens der elastischen Folie bzw. Trennschicht 1 auf drehbar gelagerte Rollen 8; und
Fig 7: eine schematische Darstellung einer als Polymerisationswanne ausgeformten Trennschicht 1.

Als Trennschicht wird ein elastisches, transparentes/translucentes Material verwendet. Die Trennschicht kann bei diesem Verfahren
A) zwischen Material und Bodenplatte in Form einer transparenten Folie angeordnet sein, in der Form, daß die Trennschicht keine Verbindung mit der transparenten Bodenplatte eingeht.
B) als direkte Beschichtung auf die transparente Bodenplatte aufgebracht werden, sodaß eine elastische Trennschicht auf der Bodenplatte entsteht (z.B. Silikon).
Zu A): Folie als Trennschicht

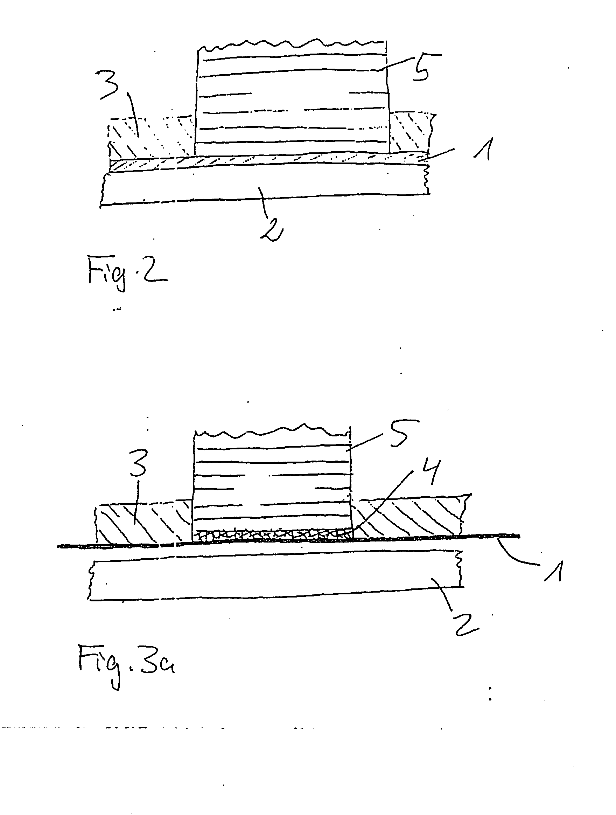

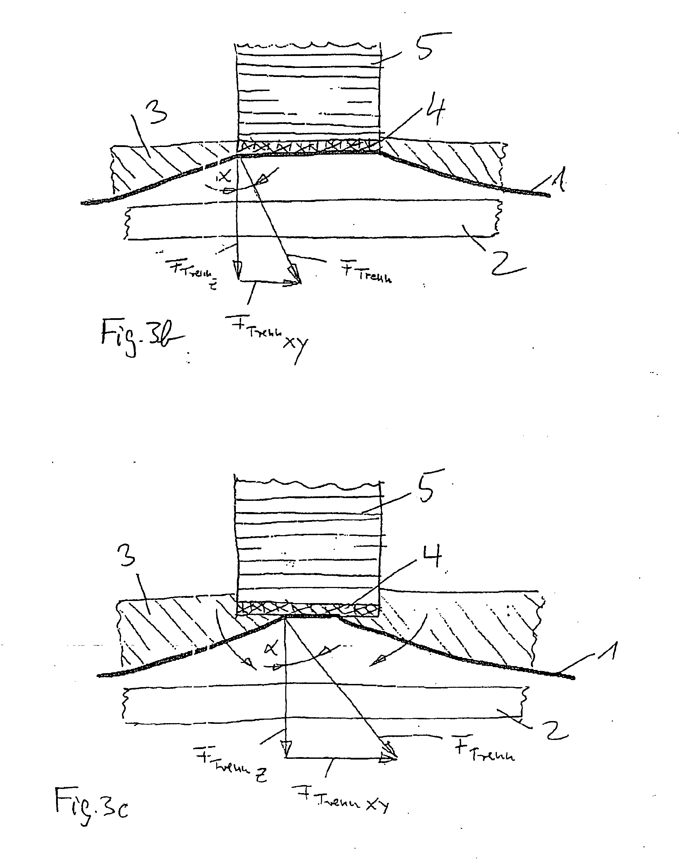

Als Trennschicht wird eine (transparente) Folie gewählt, die zwischen der Bodenplatte und dem Photopolymer angeordnet ist (Abb. 3a).

Da die Folie nicht an der Bodenplatte haftet und so keine feste, unverformbare Einheit mit der Bodenplatte bildet, kann sie sich während des Trennvorgangs elastisch verformen, sodaß ein sogenannter "Schäl"- oder "Abzieh"-vorgang an der ausgehärteten Schicht hervorgerufen wird. Durch die elastische Verformung der Trennschicht bzw. den Abziehvorgang findet eine Verlagerung/Vektorzerlegung des Trennkraftvektors statt, die den Trennvorgang wesentlich erleichtert (siehe Abb. 3b-c). Dieser Vorgang kann durch das Anlegen eines Unterdruckes an den Zwischenraum zwischen Folie und Bodenplatte noch verstärkt werden und hat weiterhin den Vorteil, dass die ausgehärtete Schicht nur in dem Mass der folgenden Schichtdicke von der Bauebene weg bewegt werden muss.

Das Material der Folie kann je nach verwendetem Photopolymer für den Trennvorgang ausgewählt, bzw. optimiert werden.

Ein zusätzlicher "Antihaft"-Effekt und die leichte Inhibierung der radikalen Polymerisation bei Acrylat-Systemen kann z.B. durch den Einsatz von FEP-, PTFE- oder PFA-Folien zusätzlich hervorgerunfen werden.

Die Folie kann bei Beschädigung oder Abnutzung unproblematisch ausgewechselt werden.,

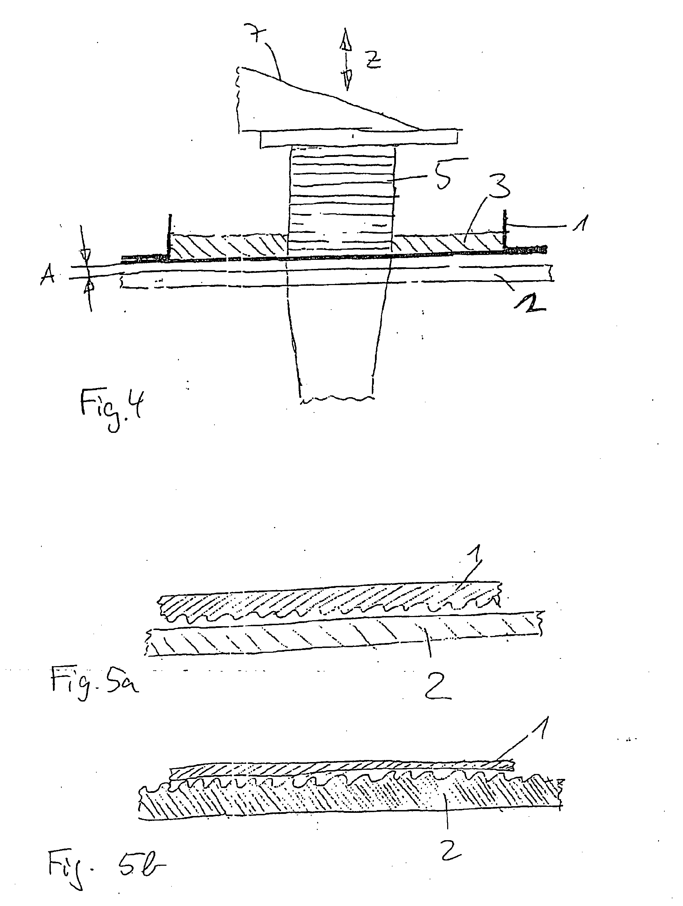

Zur Verbesserung der Wartung oder Reinigung des Gerätes kann die Folie in Verbindung mit einem zusätzlichen Rahmen aus dem selben oder anderem Material zu einer Art "Becken" ausgebildet werden (siehe Abb. 4), mit dem verbleibendes Restmaterial (Photopolymer) in ausgehärteter Form leicht entfernt und entsorgt werden kann.

Wird eine Folie aus einem hochelastischen Material wie z.B. Latex oder Silikonkautschuk verwendet, kann sich für den Trennvorgang zusätzlich ein Schereffekt zunutze gemacht werden. Dieser Effekt wird durch ein Dehnen der Folie in der Referenzenbene während des Trennvorganges hervorgerufen. Durch die Kombination von Schäl- und Schereffekt wird die Trennung erleichtert und der Trennweg beschränkt sich auf den Abstand der nächsten Schichtdicke.

Die Anordnung in Abb. 4 zeigt eine Vorrichtung für eine Rapid Prototyping Verfahren mit Hilfe der Photoverfestigung, wobei sich in einem Becken mit einer transparenten Bodenplatte (z.B. aus Glas) und einer darüber gespannten ebenso transparenten Folie ein flüssiges Material (lichthärtender Kunststoff) befindet. Die Folie ist dabeo so im Randbereich des Beckens zwischen Rahmen und Bodenplatte eingespannt, dass ein Abstand zwischen Bodenplatte und Folie gewährleistet wird, welcher die Haftung der Folie im gespannten Zustand an der Bodenplatte verhindern würde und eine Luftzu- und -abfuhr zum/vom Zwischenraum zwischen Folie und Bodenplatte ermöglicht.

Über dem Becken befindet sich eine Trägerplatte die in vertikaler Richtung zur Bodenplatte durch eine Lineareinheit angehoben und abgesenkt werden kann.

Für die erste Schicht wird die Trägerplatte soweit in das Material eingetaucht, dass die Tiefenhärtung des selektiv belichteten Photopolymers (z.B. durch Multimedia Projektor oder Laser) eine feste Haftung an der Unterseite der Trägerplatte gewährleistet.

Wird die Trägerplatte mit samt der ausgehärteten Schicht(en) angehoben, löst sich die Folie von der Unterseite der ausgehärteten Materialschicht durch eine Art Schäl-/Abziehvorgang, wenn die Kraftvektoren zwischen ausgehärteter Materialschicht und Folie zur Trennung eine ausreichend große horizontale Komponente (F _{Trenn XY} ) aufweisen (Abb. 3a-c).

Die horizontale Kraftkomponente (F _{Trenn XY} ) kommt dadurch zustande, dass sich beim Anheben des Objektes die Folie zwischen Rahmeneinspannung und dem an der ausgehärteten Materialschicht haftenden Bereich elastisch verformt bzw. spannt und sich mit dem verändernden Anstellwinkel α der Folie zur Materialschicht auch die Kraftangriffsrichtung aus der senkrechten heraus bewegt.

Die Trägerplatte muß dabei soweit angehoben werden, daß sich die Folie vollständig von der ausgehärteten Fläche trennen und durch anschließende Relaxation in ihren Ursprungszustand zurückkehren kann.

Frisches, flüssiges Material für die folgende auszuhärtende Schicht wird automatisch durch den wachsenden, keilförmigen Spalt zwischen Folie und ausgehärteter Schicht während des Trennvorgangs mitgenommen.

Eine Alternative für die Unterbindung der Haftung der Folie an der Bodenplatte und eine Gewährleistung der Luftzufuhr und somit Verhinderung des Ansaugens der Folie an der Ebene/Bodenplatte kann durch eine gezielt hervorgerufene Oberflächenrauhigkeit bzw. Strukturierung
a) an der Unterseite der Folie (Abb. 5a)durch Mikro-/Nanostrukturierung oder
b) an der zur Folie ausgerichteten Seite der Bodenplatte (Abb. 5b), z.B. durch Anätzen der Glasoberfläche oder entsprechend rauhe Beschichtungen (ITO-Beschichtung)
umgesetzt werden.

Erreicht die Folie z.B. eine ausreichende Eigensteifigkeit oder ist ausreichend gespannt, kann u.U. auf die transparente Referenzplatte ganz verzichtet werden.

In einer weiteren Ausführungsform sind Folie und transparente Referenzplatte so angeordnet, daß zwischen Platte und Folie ein flache Kammer ausgebildet ist, die mit einem flüssigen oder gasförmigen Medium gefüllt ist . An die Kammer kann ein Unterdruck angelegt werden, um den Trenn-/Abschälvorgang zu beschleunigen und das Anheben/Absenken der Trägerplatte samt Objekt beim Trennvorgang auf ein Minimum, nämlich die folgende Schichtdicke zu reduzieren.

Der Unterdruck wird dann angelegt, wenn das Objekt auf die nächste Schichtdicke angehoben ist, um die elastische Verformung der Folie zu forcieren und den Anstellwinkel α der Folie im Randbereich außerhalb der Kontur der anhaftenden ausgehärteten Fläche bis zum Einsetzen des Abschälvorgangs zu vergrößern.

Der Unterdruck wird solange angelegt, bis sich die Folie komplett von der ausgehärteten Schicht abgelöst und relaxiert hat.

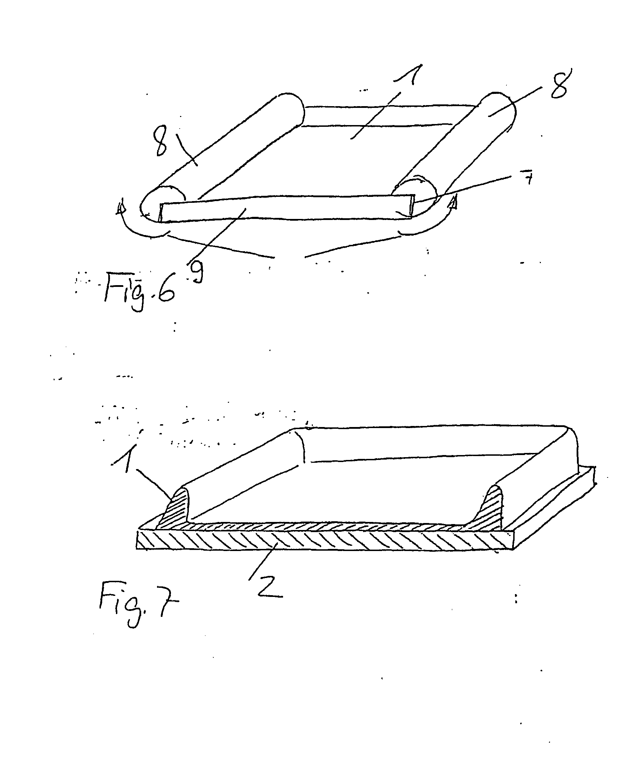

Um das Problem der plastischen Verformung und des Kriechens der Folie im Dauerbetrieb zu vermeiden, kann eine hoch elastische Folie eingesetzt werden, die während des Trennvorganges gedehnt wird. Dazu wird die Folie z.B. über zwei gegenüberliegende Rollen eingespannt (siehe Abb. 6) und durch beidseitig "Aufrollen" gedehnt und anschließendes "Abrollen" wieder in den Urzustand zurückgeführt. Durch die so gleichmäßige Dehnung der Folie in entgegengesetzte Richtungen verjungt sich die Foliendicke temporär und zusätliche Scheerkräfte treten auf.

Die Einspannung der Folie zwischen den in einem Rahmen gehaltenen Rollen kann dabei so gestaltet sein, dass ein Becken entsteht, in dem sich das flüssige Photopolymer befindet (siehe Abb. 6).

Eine Alternative zur Folie bietet das Auftragen einer optisch transparenten Silikonschicht auf der zum Photopolymer orientierten Glasplatte. Beim Trennvorgang verhält sich die dem Photopolymer zugewandte Silikonschicht vom Prinzip her ähnlich der Folie, d.h. in der gesamten Silikonschicht findet eine elastische Verformung statt und die inneren Spannungen in der Silikonschicht führen dazu, daß sich die an der ausgehärteten Materialschicht haftenden Bereiche der Silikonschicht abschälen.

Wichtig ist hierbei, daß eine gute Haftung der Silikonschicht an der Bodenplatte (Glasplatte) gewährleistet ist, bzw. die Haftung zwischen Silikonschicht und Bodenplatte um ein Vielfaches größer ist als die Haftung zwischen Silikonschicht und ausgehärtetem Material.

Durch das Ausformen eines Rahmens aus dem selben Silikonmaterial ensteht ebenfalls ein Becken zur Aufnahme des flüssigen Photopolymers (siehe Abb. 7).

Die oben beschriebenen Verfahren mit Folie oder Silikon sind nicht auf die oben beschriebene Anordnung beschränkt. Ihr Einsatz ist auch in den skizzierten Varianten, siehe Abb. 1a-c. denkbar, sowie z.B. in der Anordnung aus der Gebrauchsmusterschrift DE G 93 19 405.6 "Vorrichtung zur Herstellung eines dreidimensionalen Objekts (Modells) nach dem Prinzip der Photoverfestigung".

## Patentansprüche

1. Vorrichtung zur Trennung einer, auf einer planen, als Referenz dienenden Ebene (2) ausgehärteten Materialschicht (4) mit Hilfe einer zwischen der Ebene (2) und der Materialschicht (4) angeordneten flexiblen, elastischen Trennschicht (1) in Form einer transparenten Folie, wobei die elastische Schicht (1) nicht an der Ebene (2) haftet, wobei sich die elastische Trennschicht (1) während des Trennvorgangs elastisch verformt, bis der Schälvorgang vom ausgehärteten Material (4) in Gang gesetzt wird, wobei ein gasförmiges oder flüssiges Medium zwischen der elastischen Trennschicht (1) und der planen Ebene (2) strömen kann, **dadurch gekennzeichnet, daß**, die elastische Trennschicht (1) nicht an die plane Ebene (2) gebunden ist, und, daß die elastische Trennschicht nach vollständiger Ablösung und durch Relaxation im ihren Ursprungszustand zurückkehrt.

2. Vorrichtung nach Anspruch 1, wobei die der planen Ebene zugewandte Oberfläche der elastischen Trennschicht (1) eine Mikrostrukturierung/Nanostrukturierung aufweist, um eine Zufuhr von Luft zwischen der elastischen Trennschicht (1) und der planen Ebene (2) zu gewährleisten.

3. Vorrichtung nach Anspruch 1, wobei die der elastischen Trennschicht (1) zugewandte Oberfläche der planen Ebene (2) eine Oberflächenrauigkeit aufweist, um eine Zufuhr von Luft zwischen der elastischen Trennschicht (1) und der planen Ebene (2) zu gewährleisten.

## Claims

1. Device for separating a material layer (4) hardened on a flat plane (2) serving as a reference by means of a flexible, elastic separation layer (1) disposed between the plane (2) and the material layer (4) in the form of a transparent film, wherein the elastic layer (1) does not adhere to the plane (2), wherein the elastic separation layer (1) is elastically deformed during the separation process until the peeling process of the hardened material (4) is started, wherein a gaseous or liquid medium can flow between the elastic separation layer (1) and the flat plane (2), **characterized in that** the elastic separation layer (1) is not bound to the flat plane (2) and that the elastic separation layer returns to its original state after complete separation and by relaxation.

2. Device according to claim 1, wherein the surface of the elastic separation layer (1) facing the flat plane comprises a microstructuring/nanostructuring, so as to ensure a supply of air between the elastic separation layer (1) and the flat plane (2).

3. Device according to clam 1, wherein the surface of the flat plane (2) facing the elastic separation layer (1) has a surface roughness, so as to ensure a supply of air between the elastic separation layer (1) and the flat plane (2).

## Revendications

1. Dispositif pour la séparation d'une couche de matériau (4) durcie sur un plan plat (2) servant de référence, au moyen d'une couche de séparation (1) élastique flexible, agencée entre le plan (2) et la couche de matériau (4) en forme d'un film transparent, dans lequel la couche élastique (1) n'adhère pas au plan (2), dans lequel la couche de séparation élastique (1) est déformée élastiquement pendant le processus de séparation, jusqu'à ce que le processus de détachement du matériau durci (4) soit déclenché, dans lequel un milieu gazeux ou liquide peut circuler entre la couche de séparation élastique (1) et le plan plat (2), **caractérisé en ce que** la couche de séparation élastique (1) n'est pas liée au plan plat (2) et **en ce que** la couche de séparation élastique retourne à son état d'origine après un détachement complet et par relaxation.

2. Dispositif selon la revendication 1, dans lequel la surface de la couche de séparation élastique (1) tournée vers le plan plat a une microstructuration/ nanostructuration, de façon à assurer une alimentation en air entre la couche de séparation élastique (1) et le plan plat (2).

3. Dispositif selon la revendication 1, dans lequel la surface du plan plat (2) tournée vers la couche de séparation élastique a une rugosité de surface, de façon à assurer une alimentation en air entre la couche de séparation élastique (1) et le plan plat (2).
